# EUROPÄISCHE PATENTSCHRIFT

(11) **EP 0 396 686 B1**
(45) Veröffentlichungstag und Bekanntmachung des Hinweises auf die Patenterteilung: **22.06.1994**
(21) Anmeldenummer: 89911756.8
(22) Anmeldetag: 31.10.1989
(51) Int. Cl.: H04L 12/56, H04J 14/08

(54) **VERFAHREN UND VORRICHTUNG ZUM DEZENTRALEN AUSSENDEN VON INFORMATION AUF EINE ÜBERTRAGUNGSSTRECKE**
A PROCESS AND DEVICE FOR THE DECENTRALISED TRANSMISSION OF INFORMATION ON A TRANSFER PATH
PROCEDE ET DISPOSITIF D'EMISSION DECENTRALISEE D'INFORMATIONS SUR UNE SECTION DE LIGNE DE TRANSMISSION DE DONNEES

(30) Priorität: 03.11.1988 CH 4093/88
(43) Veröffentlichungstag der Anmeldung: 14.11.1990
(73) Patentinhaber: ASCOM TECH AG, CH-3018 Bern (CH)
(72) Erfinder: RAO, Sathyanarayana, CH-3015 Bern (CH); POTTS, Martin, CH-3115 Gerzensee (CH); BEELER, Reto, CH-3018 Bern (CH)
(74) Vertreter: Schwerdtel, Eberhard, Dr.
(86) Internationale Anmeldenummer: CH8900189
(87) Internationale Veröffentlichungsnummer: WO9005420

(56) Entgegenhaltungen:
- GB-A- 2 207 326
- US-A- 4 524 440
- US-A- 4 646 287

## Beschreibung

Die Erfindung betrifft ein Verfahren und eine zugeordnete Vorrichtung zum dezentralen Aussenden von Information auf eine Uebertragungsstrecke entsprechend dem Oberbegriff der unabhängigen Ansprüche.

Uebertragungsstrecken und diverse Arten der Informationsübertragung über derartige Strecken sind allgemein bekannt. In neuerer Zeit werden aus verschiedenen Gründen optische Uebertragungsstrecken zunehmend wichtig. Neben den optischen Punkt/Punkt-Verbindungen gibt es auch kompliziertere Netzstrukturen mit optischen Leitungen. So beschreibt z.B. B. Viklund in einem Artikel "Optical fibres in local area networks", Communications/Communications International, October 1985, Seite 19 ff. verschiedene Netzstrukturen mit Glasfaserkabeln für Verteilnetze und für Netze mit individuell aufbaubaren Verbindungen zwischen diversen Teilnehmern. Bei letzteren ist vor allem eine Ringstruktur günstig. Die Teilnehmerstellen einer optischen Uebertragungsleitung der letztgenannten Art sind über optische Koppler an die jeweils verwendete Faser angeschlossen.

Auf der Basis von GaAs-Halbleitermaterial gibt es heute Koppler, Weichen und Modulatoren für optische Systeme, die zur Lichtbeeinflussung elektrooptische Effekte ausnützen. Diese Elemente arbeiten bis zu Frequenzen im Gigahertz-Bereich.

Zur Uebermittlung von Information ist die Verwendung von adresscodierten Paketen allgemein bekannt. Solche Pakete weisen einen Kopfteil (header) und einen Informationsteil auf, wobei der Kopfteil alle für das jeweilige Paket und die beteiligten Uebertragungseinrichtungen, insbesondere den jeweiligen Sender und den Empfänger notwendigen Daten enthält. Der Informationsteil steht für die zu übertragende Information zur Verfügung. Ist er leer, so spricht man von einem Leerpaket.

Es sind verschiedene Methoden bekannt, wie adresscodierte Pakete erzeugt bzw. wie Leerpakete in Informationspakete umgewandelt werden können. Hierzu wird beispielsweise die Schrift CH 550 521 genannt, die als eine der ersten die heute unter der Bezeichnung "Buffer Insertion" bekannte Methode beschreibt. Gemeinsam ist allen diesen Methoden, dass sie an irgendeiner Stelle eine Verzögerung aufweisen, sei es, dass ein neues Paket in einen vorhandenen Strom von Paketen eingeschoben wird, wobei der gesamte Strom um eine Paketlänge verzögert wird, oder sei es, dass das Lesen des Kopfteiles eines Pakets abgewartet werden muss, bevor klar ist, ob es sich um ein Leerpaket handelt, usw.

Bei optischen Systemen ist eine gesteuerte Verzögerung auf den Uebertragungsleitungen (bisher) nicht möglich. Eine solche Verzögerung kann nur dadurch erfolgen, dass diese im elektronischen Teil des Systems, z.B. durch ein Schieberegister, erfolgt. Bei einer optischen Uebertragungsstrecke, die vor allem sogenannte passive Teilnehmerknoten aufweist, die keine aktive Lichtquelle (z.B. eine Laser-Diode) aufweisen, ergibt sich hieraus die Aufgabe, eine Methode anzugeben, wie vorbeilaufende Leerpakete vollständig verzögerungsfrei erkennbar und mit bereitgestellter Information füllbar sind. Diese Methode muss verträglich sein mit der Methode des Empfangs von Informationspaketen, die über dieselbe Uebertragungsstrecke laufen bzw. ankommen.

Die Lösung dieser Aufgabe wird durch die unabhängigen Ansprüche gegeben, während der abhängige Anspruch eine Ausgestaltung der Erfindung angibt. Damit gelingt es nunmehr, bei optischen Uebertragungsstrecken relativ einfache und damit billige Teilnehmerknoten aufzubauen.

Im folgenden wird die Erfindung anhand von sieben Figuren beispielsweise näher beschrieben. Es zeigen:
Fig. 1 - schematische Darstellung einer optischen Uebertragungsstrecke
Fig. 2 und 3 - Varianten der Uebertragungsstrecke
Fig. 4 - schematische Darstellung eines optischen Richtungskopplers
Fig. 5 - symbolische Darstellung des Richtkopplers
Fig. 6 - schematischer Aufbau eines Pakets
Fig. 7 - Blockschaltbild eines Teilnehmerknotens.

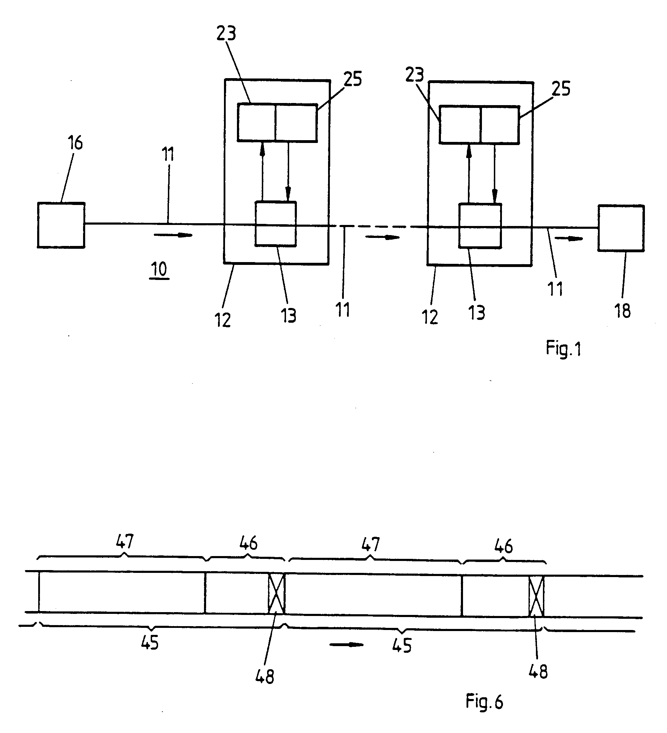

Fig. 1 zeigt schematisch eine Uebertragungsstrecke 10, auf der digitale Signale in Pfeilrichtung übertragen werden. Als Uebertragungsmedium dient eine optische Faser 11, insbesondere eine Monomodefaser. In diese Faser 11 ist eine Mehrzahl von Teilnehmerknoten 12 eingefügt, wodurch die Faser 11 zwar in Abschnitte unterteilt wird, der Lichtfluss insgesamt jedoch nicht unterbrochen wird.

Der Lichtfluss beginnt bei einer Lichtquelle 16, insbesondere einem Halbleiterlaser, die einen im wesentlichen konstanten Gleichlichtstrom in den Anfang der Faser 11 einspeist. Der Lichtstrom endet bei einem optischen Empfänger 18, insbesondere einer Fotodiode mit nachgeschaltetem Verstärker. Die Teilnehmerknoten 12 weisen Zugriffseinheiten 13 auf, die wie beschrieben den Lichtstrom entlang der Uebertragungsstrecke 10 nicht unterbrechen. Die Teilnehmerknoten 12 sind weiter so ausgebildet, dass sie im Lichtstrom enthaltene Information empfangen bzw. Information in den Lichtstrom einfügen können. An die Zugriffseinheiten 13 sind zu diesem Zweck je ein elektronischer Empfänger 23 und ein Sender 25 angeschlossen, die die empfangene bzw. die abzusendene Information geeignet auf- bzw. zubereiten.

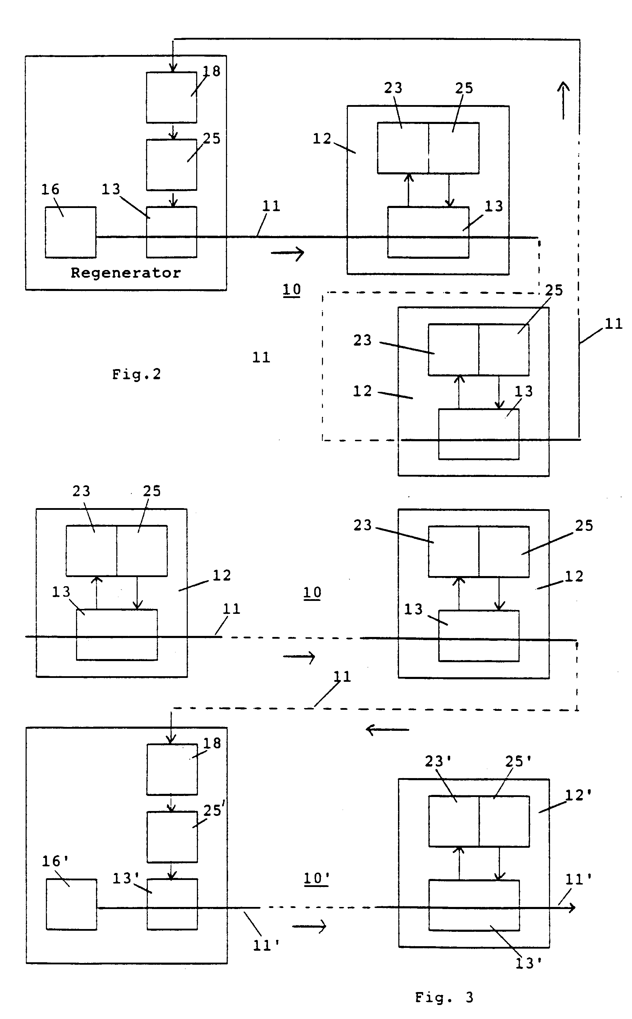

Fig. 2 zeigt eine erste Variante de Uebertragungsstrecke 10. Diese ist ringförmig verlegt, so dass der optische Empfänger 18 über eine kurze elektrische Verbindung mit einem Sender 25 einer der Lichtquelle 16 nachgeschalteten Start-Zugriffseinheit 13 verbunden werden kann. Hierdurch entsteht eine Ringanordnung, bei der jeder Teilnehmerknoten 12 mit jedem anderen Teilnehmerknoten 12 kommunizieren kann. Hierbei bildet die Einheit 16 die einzige Lichtquelle.

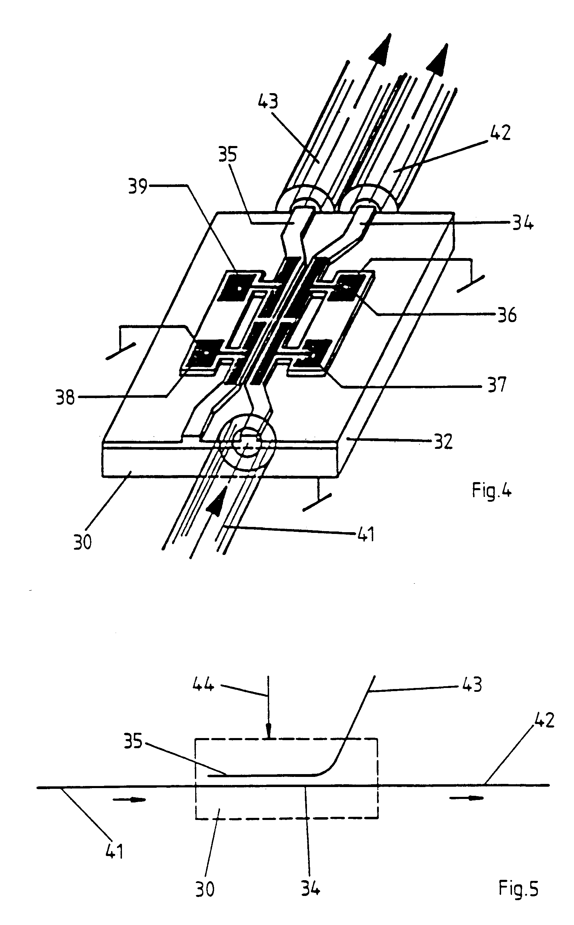

Fig. 3 zeigt eine zweite Variante der Uebertragungsstrecke 10. Bei dieser ist der optische Empfänger 18, ebenfalls durch eine kurze elektrische Verbindung mit einem Sender 25' einer weiteren Uebertragungsstrecke 10' verbunden. Dieser Sender 25' ist analog zum vorher Beschriebenen einer weiteren Start-Zugriffseinheit 13' zugeordnet, die einer weiteren Lichtquelle 16' nachgeschaltet ist. Auf diese Weise sind zwei oder mehr Uebertragungsstrecken 10, 10' in Serie schaltbar, die insgesamt natürlich wiederum kreisförmig zusammenfügbar sind.

Fig. 4 zeigt in schematischer, stark vergrösserter Darstellung einen integrierten optischen Richtungskoppler 30 als Herzstück der genannten Zugriffseinheiten 13. Der Richtungskoppler 30 weist auf einem InP-Substrat 32 zwei benachbarte, optische Rippenwellenleiter 34, 35 auf, die von insgesamt vier metallischen Steuerelektroden 36 bis 39 bedeckt sind, über die elektrische Steuerspannungen anlegbar sind. Der Richtungskoppler ist auf seiner Eingangsseite mit dem einen Rippenwellerleiter 34 an eine ankommende Faser, insbesondere eine Monomodefaser 41 angeschlossen. Auf seiner Ausgangsseite ist er mit beiden Rippenwellenleitern 34, 35 an je eine abgehende Monomodefaser 42 bzw. 43 angeschlossen.

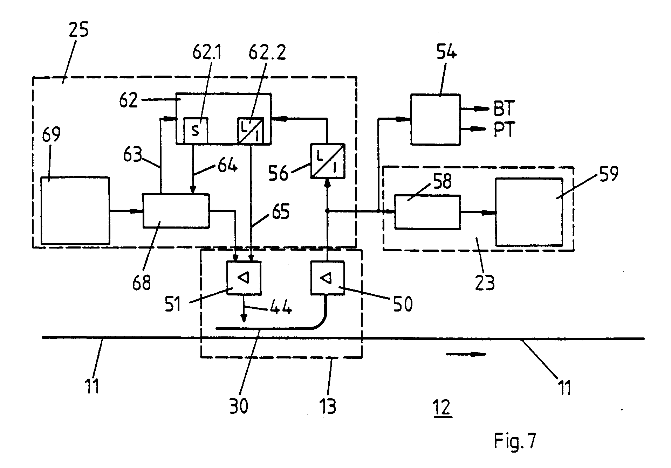

Der beschriebene, an sich bekannte Richtungskoppler 30 arbeitet als Lichtweiche, wobei in Abhängigkeit von den an die Steuerelektroden 36 bis 39 angelegten Spannungen der über die Faser 41 ankommende Lichtstrom mehr oder weniger stark auf die beiden abgehenden Fasern 42, 43 aufteilbar ist. Fig. 5 zeigt eine Symbol-Darstellung des Richtungskopplers 30, die die Weichenfunktion zum Ausdruck bringen soll. Der Pfeil 44 symbolisiert dabei die elektrische Ansteuermöglichkeit, die über die Steuerelektroden 36 bis 39 (Fig. 4) gegeben ist.

Fig. 6 zeigt schematisch eine Folge von digitalen Paketen 45, die zeitlich in Pfeilrichtung auf der Uebertragungsstrecke 10 laufen. Diese Pakete werden durch Intensitätsmodulation des vom Lichtsender 16 erzeugten Gleichlichtstromes gebildet und bestehen je aus einem Kopfteil 46 und einem Informationsteil 47. Ist der Informationsteil 47 leer, so handelt es sich um ein Leerpaket, ansonsten um ein Infopaket. Die Pakete 45 folgen sich unterbruchslos und in beliebiger Reihenfolge und bestehen aus einer erheblichen Anzahl von Bits, z.B. aus 1000 Bits. Die Pakete 45 sind so gebildet, dass sich jede Zugriffseinheit 13 selbständig auf den Bittakt BT und auf den Pakettakt PT der Pakete 45 synchronisieren kann. Das jeweils erste Bit jedes Paketes 45 unterscheidet Leerpakete und Infopakete und wird im folgenden L/I=Bit 48 genannt (L = leer, I = Information).

Die Pakete 45 durchlaufen auf der Uebertragungsstrecke 10 nacheinander alle Teilnehmerknoten 12. Die (die Information tragende) Lichtintensität der Pakete schwächt sich hierbei ab, zum einen durch die Verluste in den optischen Fasern 11 und zum anderen durch Abzweigverluste in den Zugriffseinheiten 13. Diese Abzweigverluste sind unvermeidlich, denn jeder Empfänger 23 überwacht ständig alle die jeweilige Zugriffseinheit 13 durchlaufenden Pakete 45 daraufhin, ob im Kopfteil seine Adresse enthalten ist und er (der Empfänger 23) damit der durch die Adresse bestimmte Empfänger des jeweiligen Infoteils 47 ist.

Soll von einem Sender 25 Information auf die Uebertragungsstrecke 10 ausgesendet werden, so wird diese Information paketweise bereitgestellt und in Leerpakete eingeschrieben, die den jeweiligen Teilnehmerknoten 12 durchlaufen. Hierzu muss im jeweiligen Teilnehmerknoten 12 bzw. dem zugeordneten Empfänger 23 zum einen das L/I-Bit 48 jedes Pakets 45 gelesen werden. Zum anderen muss dieses L/I-Bit jeweils gleichzeitig, sofern es sich um ein Leerpaket handelt, von seinem einen Zustand L (leer) in seinem zweiten Zustand I (Information) umgeändert werden. Hierdurch können im Signalfluss nachfolgende Teilnehmerknoten 12 erkennen, dass es sich in der Folge nichtmehr um ein Leerpaket, sondern vielmehr um ein Infopaket handelt.

Der Vorgang des gleichzeitigen Lesens und Umänderns des jeweiligen L/I-Bits 48 erfolgt in folgender Weise: Jeder Teilnehmerknoten 12 und damit auch der zugehörige Empfänger 23 ist auf den Bittakt BT und den Pakettakt PT synchronisiert. Sobald nun Information in ein Leerpaket eingeschrieben werden soll, leitet die jeweilige Zugriffseinheit 13 mit Hilfe ihres Richtungskopplers 30 die Lichtmenge jedes L/I-Bits 48 jeweils vollständig einem L/I-Detektor 56 (Fig. 7) zu. Ist diese Lichtmenge kleiner als ein vorgegebener Schwellenbetrag bzw. ist sie Null, so bedeutet dies den Zustand "Information" I. In diesem Fall handelt es sich um ein Infopaket, das nicht verändert werden darf. Der Richtungskoppler 30 wird daher sofort, d.h. bereits für das zweite Bit des jeweiligen Pakets 45, in seine Normalstellung zurückgestellt. Das weiterlaufende Infopaket besitzt hierdurch ein L/I-Bit 48, das praktisch unverändert aus "Null-Licht" gebildet ist, während das restliche Paket völlig unverändert aus beliebigen Bits, d.h. Dunkel- und Hell-Mustern besteht.

Ist die Lichtmenge des L/I-Bits 48 dagegen grösser als der genannte Schwellenbetrag, so bedeutet dies den Zustand L, d.h. leer. In diesem Fall handelt es sich um ein Leerpaket, das sofort durch Modulation im Bittakt BT mit der bereitgestellten Information gefüllt werden soll. Das L/I-Bit 48 wurde durch die genannte Stellung des Richtungskopplers 30 bereits von "hell" nach "dunkel" umgeändert, so dass das zur nächsten Zugriffseinheit 13 weiterlaufende jeweilige Paket 45 ein vollständiges Infopaket ist, das im genannten Teilnehmerknoten 12 und durch den Umwandlungsprozess keinerlei Verzögerung erfahren hat.

Die Voraussetzungen für die beschriebene Methode sind, dass das L/I-Bit 48 zu vorderst an der Spitze der Pakete 45 steht und dass sein erster Zustand L (Leerpaket) als hell bzw. vorhandene Lichtintensität dargestellt wird, während sein zweiter Zustand nichtvorhandene Lichtintensität ist.

Fig. 7 zeigt ein verfeinertes Blockschaltbild eines Teilnehmerknotens 12 mit der beschriebenen Zugriffseinheit 13 sowie dem zugehörigen Empfänger 23 und Sender 25. Dieser Teilnehmerknoten 12 bildet eine technische Ausgestaltung, mit deren Hilfe die beschriebene Methode des gleichzeitigen Lesens und Umänderns des L/I-Bits 48 ausführbar ist. In die optische Faser 11 eingefügt ist wie bereits beschrieben eine Zugriffseinheit 13, die einen Richtungskoppler 30 umfasst. Diesem nachgeschaltet ist ein optoelektrischer Wandler 50 mit integriertem Eingangsverstärker. Ein Ausgangs- bzw. Treiberverstärker 51 ist mit den Steuerelektroden 36 bis 39 des Richtungskopplers 30 verbunden, die (wie anhand von Fig. 5 erklärt) durch den Pfeil 44 symbolisiert sind.

Dem Eingangsverstärker 50 nachgeschaltet sind der genannte Empfänger 23, eine Synchronisiereinheit 54 sowie ein L/I-Detektor 56. Der Empfänger 23 umfasst einen Pufferspeicher 58 zur Aufnahme aller Bits jeweils eines empfangenen Pakets 45 und eine eigentliche Empfängereinheit 59 zum Empfang der für den jeweiligen Knoten 12 bestimmten Information. Die Synchronisiereinheit 54 ist eine an sich bekannte Einheit, die aus dem Signalmuster auf der Faser 11 den Bittakt BT und den Pakettakt PT synchron und phasenrichtig regeneriert. Diese an ihren Ausgängen anliegenden Takte BT und PT dienen zum Steuern des gesamten jeweiligen Teilnehmerknotens 12. Der L/I-Detektor 56 schliesslich ist funktionsmässig bereits dem Sender 25 zuzuordnen. Er gibt an, ob das L/I-Bit 48 die Bedeutung L (Leerpaket) oder I (Infopaket) aufweist. Der L/I-Detektor 56 kann beispielsweise als monostabile Kippschaltung mit festgelegter Schwellenspannung ausgebildet sein.

Dem Ausgangsverstärker 51 vorgeschaltet ist der Sender 25. Dieser umfasst einen Pufferspeicher 68, in dem die abzusendende Information paketweise bereitgestellt wird. Weiter umfasst er eine eigentliche Sendeeinheit 69 und eine Steuerung 62 mit zwei Untersteuerungen 62.1 und 62.2. Die Steuerung 62 ist signalmässig mit dem Pufferspeicher 68, dem L/I-Detektor 56 und dem Ausgangsverstärker 51 verbunden.

Der Teilnehmerknoten 12 arbeitet wie folgt: Sobald im Pufferspeicher 68 Information für ein Paket 45 bereitgestellt ist, wird die Steuerung 62 über die Verbindung 63 entsprechend informiert. Die Untersteuerung 62.2 leitet hierauf jedes nachfolgend an der Zugriffseinheit 13 ankommende L/I-Bit 48 (und nur dieses) durch entsprechende Richtungssteuerung des Richtungskopplers 30 über den optoelektrischen Wandler 50 dem L/I-Detektor 56 zu. Dieser entscheidet jeweils sofort, ob das L/I-Bit 48 den Zustand L (Leerpaket) oder I (Infopaket) anzeigt. Beim Zustand L gibt die Untersteuerung 62.1 unmittelbar über die Verbindung 64 an den Pufferspeicher 68 einen Sendebefehl ab, worauf der Pufferspeicher 68 im Bittakt BT die in ihm enthaltene Information über den Ausgangsverstärker 51 an das jeweilige Leerpaket abgibt. Letzteres bedeutet, dass der dem Leerpaket entsprechende Lichtstrom moduliert und hierdurch in ein Infopaket umgewandelt wird. Zeigt das L/I-Bits 48 dagegen ein Infopaket I an, dann passiert weiter nichts, da die Untersteuerung 62.2 den Richtungskoppler 30 generell nach jedem L/I-Bit 38 zurück in seine Durchlassrichtung und damit in den Grundzustand schaltet. Das jeweilige Infopaket kann daher unverändert passieren. Auf diese Weise wird das nach angezeigter Sendebereitschaft jeweils nächste Leerpaket mit Information gefüllt, während die Infopakete ungehindert passieren.

Die beschriebene optische Uebertragungsstrecke 10, 10' mit ihren Teilnehmerknoten 12 ist für Uebertragungsfrequenzen bis zum Gigahertzbereich geeignet. Mit ihr lassen sich bevorzugt ringförmige Netze aufbauen, bei denen jeder Teilnehmerknoten 12 mit jedem anderen Knoten beliebig kommunizieren kann. Die Länge zwischen jeweils zwei Lichtquellen kann viele Kilometer betragen. Sie hängt allein von den Verlusten in den optischen Fasern 11 und von der Anzahl jeweils angeschlossener Teilnehmerknoten 12 ab, da diese (wie beschrieben) ebenfalls jeweils einen gewissen Lichtverlust bewirken.

## Patentansprüche

1. Verfahren zum dezentralen Aussenden von Information auf eine optische Uebertragungsstrecke (10) von einer Mehrzahl von Teilnehmerknoten (12) aus,
wobei die Information in den Teilnehmerknoten (12) paketweise bereitgestellt wird,
wobei auf der Uebertragungsstrecke (10) Infopakete und Leerpakete unmittelbar und in beliebiger Reihenfolge aufeinanderfolgen und die Information durch einen modulierten Lichtstrom getragen wird,
wobei jeder Teilnehmerknoten (12) auf den Bittakt (BT) und auf den Pakettakt (PT) der Uebertragungsstrecke (10) synchronisiert ist, und
wobei Infopakete und Leerpakete durch die Bedeutung eines L/I-Bits (48) unterschieden werden, derart, dass dessen erster Zustand (L) Leerpaket und dessen zweiter Zustand (I) Infopaket bedeutet,
dadurch gekennzeichnet,
- dass das L/I-Bit (48) jeweils als erstes Bit an der Spitze der Pakete (45) angeordnet wird,
- dass in jedem Teilnehmerknoten (12), der Information zum Aussenden bereitgestellt hat, bei jedem zeitlich anschliessend ankommenden Paket (45) in einem einzigen Verfahrensschritt der jeweilige Ausgangs-Zustand (L, I) des L/I-Bits (48) ermittelt und dieses L/I-Bit gleichzeitig in den zweiten Zustand (I) gebracht wird,
- dass, sofern der Ausgangs-Zustand der ersten Zustand (L) ist, die bereitgestellte Information in das zugehörige Paket (45) eingeschrieben wird, und dass das Einschreiben von Information durch Intensitätsmodulation des Lichtes erfolgt, und
- dass, sofern der Ausgangs-Zustand der zweite Zustand (I) ist, das zugehörige Paket (45) unverändert zum nächsten Teilnehmerknoten (12) weitergeleitet wird.

2. Verfahren nach Anspruch 1,
dadurch gekennzeichnet,
- dass auf der Uebertragungsstrecke (10) von einer Gleichlichtquelle (16) stammendes Licht verwendet wird.

3. Verfahren nach Anspruch 2,
dadurch gekennzeichnet,
dass die Intensitätsmodulation des Lichtes durch Abzweigen eines Teils der jeweiligen Intensität von einem Hauptpfad des Lichtes auf einen Nebenpfad erfolgt.

4. Verfahren nach Anspruch 1,
dadurch gekennzeichnet,
dass der erste Zustand (L) des L/I-Bits (48) durch vorhandene Lichtintensität und der zweite Zustand (I) durch nichtvorhandene Lichtintensität dargestellt wird.

5. Vorrichtung zur Durchführung des Verfahrens nach den Ansprüchen 1 bis 4, zum dezentralen Aussenden von Information auf eine optische Übertragungsstrecke (10) von einer Mehrzahl von Teilnehmerknoten (12) aus,
wobei jeder Teilnehmerknoten (12)
einen Richtungskoppler (30) aufweist, der an eine optische Faser (11) der Optischen Übertragungsstrecke (10) angeschlossen ist und dem ein optoelektrischer Wandler (50) mit einem Eingangsverstärker sowie ein Ausgangsverstärker (51) zum Treiben der Steuerelektroden (36-39) des Richtungskopplers (30) zugeordnet sind,
eine Synchronisiereinheit (54) aufweist zum Synchronisieren des jeweiligen Teilnehmerknotens (12) auf den Bittakt (BT) und Pakettakt (PT) am Richtungskoppler (30),
und einen Pufferspeicher (68) aufweist, in dem die auszusendende Information bereitstellbar ist,
gekennzeichnet in jedem Teilnehmerknoten (12)
- durch eine erste Steuerung (62.2), die jeweils für die Dauer eines L/I-Bits (48) über den Ausgangsverstärker (51) und den Richtungskoppler (30) die gesamte Lichtintensität von der optischen Faser (11) auf den optoelektrischen Wandler (50) leitet,
- durch einen dem optoelektrischen Wandler (50) nachgeschalteten L/I-Detektor (56) zum Ermitteln des jeweiligen Ausgangs-Zustandes (L, I) der L/I-Bits (48) und zum Abgeben eines entsprechenden Signals, und
- durch eine zweite Steuerung (62.1), die das Aussenden der im Pufferspeicher (68) bereitgestellten Information auslöst, sofern der Zustand des jeweiligen L/I-Bits (48) der erste Zustand (L) ist.

6. Vorrichtung nach Anspruch 5,
dadurch gekennzeichnet,
dass der L/I-Detektor (56) eine monostabile Kippschaltung mit festgelegter Schwellenspannung ist.

## Claims

1. A process for the decentralised transmission of information on an optical transfer path (10) from a plurality of subscriber nodes (12), whereby the information is provided in the subscriber nodes (12) in packets, whereby on the transfer path (10) information packets and empty packets follow directly successively and in a random sequence and the information is carried by a modulated light stream, whereby each subscriber node (12) is synchronised with the bit cycle (BT) and the packet cycle (PT) of the tranfer path (10), and whereby information packets and empty packets are distinguished by the meaning of an L/I bit (48) in such a way that its first condition (L) means empty packet and its second condition (I) means information packet, characterized in that
- the L/I bit (48) is arranged as the first bit at the beginning of the packets (45);
- that in each subscriber node (12) which has provided information for transmission in each packet (45) arriving temporally successively in a single process step the respective initial condition (L, I) of the L/I bit (48) is determined and said L/I bit is simultaneously brought to the second condition (I),
- that, provided that the initial condition is the first condition (L), the provided information is written into the pertinent packet (45) and that the writing in of information is carried out by intensity modulation of the light, and
- that, provided that the initial condition is the second condition (I), the pertinent packet (45) is transferred unchanged to the next subscriber node (12).

2. A process as claimed in claim 1, characterized in
- that light originating from a constant light source (16) is used on the transfer path (10).

3. A process as claimed in claim 2, characterized in that the intensity modulation of the light is carried out by branching a part of the respective intensity from a main path of the light to a side path.

4. A process as claimed in claim 1, characterized in that the first condition (L) of the L/I bit (48) is represented by the existing light intensity and the second condition (I) by the nonexisting light intensity.

5. A device for carrying out the method as claimed in claims 1 to 4 for the decentralised transmission of information on an optical transfer path (10) from a plurality of subscriber nodes (12), whereby each subscriber node (12) is provided with a directional coupler (30) which is connected to an optical fibre (11) of the optical transmission path (10) and which is provided with an optoelectrical converter (50) with an input amplifier as well as an output amplifier for driving the control electrodes (36-39) of the directional coupler (30), with a synchronisation unit (54) for synchronising the respective subscriber node (12) to the bit cycle (BT) and the packet cycle (PT) on the directional coupler (30), and with a buffer storage (68) in which the information to be sent is made available, characterized in each subscriber node (12)
- by a first control (62.2) which conducts for the duration of an L/I bit (48) the whole light intensity from the optical fibre (11) onto the optoelectrical converter (50) via the output amplifier (51) and the directional coupler (30);
- by an L/I detector (56) provided subsequent to the optoelectrical converter (50) for determining the respective initial condition (L, I) of the L/I bits (48) and for issuing a respective signal, and
- by a second control unit (62.1) which initiates the transmission of the information provided in the buffer storage (68), provided that the condition of the respective L/I bit (48) is the first condition (L).

6. A device as claimed in claim 5, characterized in that the L/I detector (56) is a monostable trigger circuit with a fixed threshold voltage.

## Revendications

1. Procédé d'émission décentralisée d'informations sur une section de ligne optique de transmission de données optique (10) à partir d'une multitude de noeuds d'abonnés (12),
l'information étant mise à disposition, sous forme de paquets, dans les noeuds d'abonnés (12),
les paquets d'information et les paquets vides se suivant immédiatement et dans un ordre quelconque sur la section de ligne de transmission de données (10) et l'information étant portée par un flux de lumière modulé,
chaque noeud d'abonné (12) étant synchronisé sur la cadence bit (BT) et sur la cadence paquet (PT) de la section de ligne de transmission de données (10), et les paquets d'information ainsi que les paquets vides étant distingués les uns des autres sur la base de la signification d'un bit V/I (48) d'une manière que leur état premier (V) signifie paquet vide et leur état secondaire (I) paquet d'information,
caractérisé par le fait,
- que le bit V/I (48) est agencé, chaque fois comme premier bit, à la tête des paquets (45),
- que dans chaque noeud d'abonné (12) tenant à sa disposition des informations prêtes à l'émission, pour chaque paquet (45) arrivant ensuite lors d'une seule étape de cycle, l'état de sortie (V, I) du bit V/I (48) est identifié et simultanement cet bit V/I est transformé dans l'état secondaire (I),
- que, pourvu que l'état de sortie corresponde au état premier (V), l'information à disposition est inscrite dans le paquet afférent (45) et que l'inscription de l'information est réalisée par modulation d'intensité de la lumière, et
- que, pourvu que l'état de sortie corresponde au état secondaire (I), le paquet afférent (45) est dirigé, sans altération, vers le prochain noeud d'abonné (12).

2. Procédé selon revendication 1,
caractérisé par le fait
- que l'on utilise, sur la section de ligne de transmission de données (10) de la lumière en provenance d'une source de lumière continue (16).

3. Procédé selon revendication 2,
caractérisé par le fait
- que la modulation d'intensité de la lumière est réalisée par déviation d'une partie de l'intensité disponible d'un sentier principal de lumière sur un sentier auxiliaire.

4. Procédé selon revendication 1,
caractérisé par le fait
que l'état premier (V) du bit V/I (48) est représenté par l'intensité de lumière disponible et l'état secondaire (I) par l'intensité de lumière non disponible.

5. Dispositif de réalisation du procédé selon les revendications 1 à 4, pour l'émission décentralisée d'informations sur une section de ligne de transmission de données optique (10) à partir d'une multitude de noeuds d'abonnés (12),
chaque noeud d'abonné (12)
comprenant un coupleur directif (30) étant raccordé à une fibre optique (11) de la section de ligne optique de transmission de données optique (10) et auquel est alloué un convertisseur opto-électrique (50) avec un amplificateur d'entrée ainsi qu'un amplificateur de sortie (51) pour l'excitation des électrodes de commande (36-39) du coupleur directif (30),
comprenant une unité de synchronisation (54) pour la synchronisation du noeud d'abonné (12) respectif sur la cadence bit (BT) et la cadence paquet (PT) sur le coupleur directif (30), et
comprenant une mémoire tampon (68), dans laquelle l'information à émettre peut être mise à disposition, caractérisé dans chaque noeud d'abonné (12),
- par une première commande (62.2) qui, pour la durée d'un bit V/I (48), dirige toute l'intensité de lumière via l'amplificateur de sortie (51) et le coupleur directif (30) de la fibre optique (11) sur le convertisseur opto-électrique (50),
- par un détecteur V/I (56) monté en aval du convertisseur opto-électrique (50) destiné à l'identificaton de l'état de sortie respectif (V,I) des bits V/I (48) et à l'émission d'un signal correspondant, et
- par une deuxième commande (62.1) déclenchant l'émission de l'information mise à disposition dans la mémoire tampon (68), pourvu que l'état du bit V/I respectif (48) est l'état premier (V).

6. Dispositif selon revendication 5,
caractérisé par le fait,
que le détecteur L/I (56) est un montage en bascule monostable avec une tension-seuil définie.
